# EUROPEAN PATENT SPECIFICATION

(11) **EP 3 963 230 B1**
(45) Date of publication and mention of the grant of the patent: **27.11.2024**
(21) Application number: 19723047.7
(22) Date of filing: 02.05.2019
(51) Int. Cl.: F16D 65/12

(54) **A METHOD FOR FORMING A FRICTION MEMBER AND A FRICTION MEMBER**
VERFAHREN ZUR HERSTELLUNG EINES REIBUNGSELEMENTS UND REIBUNGSELEMENT
PROCÉDÉ DE FORMATION D'ÉLÉMENT DE FROTTEMENT ET ÉLÉMENT DE FROTTEMENT ASSOCIÉ

(43) Date of publication of application: 09.03.2022
(73) Proprietor: Automotive Components Floby AB, 521 51 Floby (SE)
(72) Inventor: TOMAS, Adam, 521 51 FLOBY (SE); ZERVOS, Nicholas, 521 94 FALKÖPING (SE); EKLUND, Anders, 451 79 GRUNDSUND (SE); AWE, Samuel, 556 11 JÖNKÖPING (SE)
(74) Representative: Bjerkén Hynell KB
(86) International application number: PCT/EP2019/061207
(87) International publication number: WO 2020/221453

(56) References cited:
- EP-A1- 0 674 114
- DE-A1- 102009 041 077
- DE-A1- 102014 008 844
- JP-A- S62 235 462
- US-A1- 2003 183 529
- US-B1- 6 821 447

## Description

### BACKGROUND OF THE INVENTION AND PRIOR ART

The present invention relates to a method for forming a friction surface of a friction member, such as a brake disc, brake drum or a clutch plate. The invention relates also to a friction member with a friction surface. Conventional brake discs, brake drums or clutch discs are made of ferrous alloys. One disadvantage of components made of ferrous alloys is the weight of the components which is relatively high. Since some time ago it has been tendency to reduce the total weight of machines, for example vehicles, and thereby to reduce the fuel consumption of the machines. By reducing the brake disc weight, the moment of inertia of the disc in transient driving conditions is drastically reduced. Furthermore, improved corrosion resistance as well as wear resistance has been traits when looking for replacement of the ferrous materials. It has been discovered that a particle metal matrix composite (PMMC), for example, Aluminium matrix composite (Al-MC) can be used for manufacturing of friction components. AI-MC comprising reinforcing particles is increasingly gaining global interest as an alternative material to gray cast iron (GCI). This is because AI-MC has high specific stiffness, high plastic flow strength, creep resistance, good oxidation and corrosion resistance, high thermal conductivity, excellent friction and wear performance. Due to the good wear resistance, an AI-MC disc does not generate particulate matter emissions to the same extent as GCI discs do.

Efforts have been made to improve the friction coefficient of a friction surface of a friction member made of a PMMC. US6821447B1 is an example of a method where chemical etching is used for this purpose. However, chemical etching or electrochemical acid pickling in acid- or alkali-based reagents have some negative sides, such as negative effects on health and environmental issues resulting from the disposal of waste chemical reagents. Further, the cost of running processes comprising a step of chemical etching may be another drawback. Similar friction surfaces and forming methods are known from EP0674114, DE102014008844, US2003/1833529, and also from JPS62235462 that discloses a friction surface according to the preamble of claim 12.

Therefore, the invention aims at an improvement regarding the method of forming a friction surface of a friction member considering, inter alia, health and environmental issues.

It is therefore desirable to provide an improved method of forming a friction surface of a friction member with an increased friction coefficient on the friction surface. Further, it is also desirable to provide a friction member with an improved friction surface.

### SUMMARY OF THE INVENTION

One object of the present invention is to provide an improved method of forming a friction surface of a friction member with an increased friction coefficient on the friction surface.

The object is achieved by the method defined in claim 1.

Thus, the above mentioned object is achieved by a method of forming a friction surface of a friction member comprising the step of forming the friction member comprising a matrix composite of a first material, and reinforcing particles of a second material embedded in the first material. Thus, the reinforcing particles are distributed within the first material and thanks to the reinforcing particles embedded in the first material the strength of the matrix composite is increased comparing to a pure first material. Further, by forming of the friction member is meant that the friction member is shaped or modelled to a desired form or shape.

According to the method, the first material has a lower melting temperature than the second material. Thereby, the first material can be melted by applying energy at a certain level to the friction member, or more precisely to the surface layer of the friction member, while the reinforcing particles being made of the second material will remain in the same and unchanged solid phase. Thus, by choosing a suitable temperature, a phase change of the first material from solid to liquid can be achieved while the reinforcing particles of the second material will remain in the same and unchanged solid phase.

Further, the method comprises the step of forming the friction surface by melting the surface layer of the first material of the friction member to expose a part of the reinforcing particles and thereby to enable increase of the friction coefficient of the friction surface of the friction member. The reinforcing particles can be exposed by a relocation of the melted surface layer of the first material. The melted first material may be relocated within the surface layer of the friction member due to the change of the state of the surface layer from solid to liquid state and due to forces acting on the surface layer of the friction member during the melting process. Said forces are associated with heating of the surface layer of the friction member and may, for example, be a pressure forces.

The melted surface layer may comprise a part of the reinforcing particles that may float in the melted surface layer of the first material. Thus, the reinforcing particles comprised in the melted surface layer of the first material may be relocated. Thereby, by melting the surface layer of the first material the part of the reinforcing particles will be exposed, i.e. will protrude from the surface of the friction member, after the melted surface layer has solidified, i.e. has returned to the solid state after said relocation of the melted surface layer.

As mentioned above the first material and the second material melt at different temperatures, and more particularly the first material melts at a lower temperature comparing to the melting temperature of the second material, i.e. the second material melts at a higher temperature comparing to the melting temperature of the first material. Thereby, the surface layer of the first material can be melted while reinforcing particles can remain unchanged, i.e. unmelted and kept in a solid phase.

Consequently, the part of the reinforcing particles embedded in the first material can be exposed such that a portion of each of said part of the reinforcing particles protrudes from the friction surface formed by melting the surface layer of the first material and after said melted surface layer has solidified.

Because the a portion of each of said part of the reinforcing particles protrudes from the friction surface after the melting step of the surface layer of the first material, the protruding portion of each of said part of the reinforcing particles will generate friction during use of the friction element. The friction created by the exposed, i.e. the protruded portion of each of said part of the reinforcing particles will have an additional friction effect in addition to the friction generated by the remaining surface of the friction surface where there are no protruding portions of the reinforcing particles.

Further, the exposed parts of the reinforcing particles facilitate generation of a friction film that is created during initial use of the friction member by a cooperation of the friction member with a corresponding friction element. The friction film is created by a scraping process by the particles of the friction surface of the friction member from a surface of the corresponding friction element. The exposed part of the reinforcing particles may also contribute to retaining of the friction film on the friction surface of the friction member during use of the friction member.

Thus, an increase of the friction coefficient of the friction surface of the friction member will be achieved because of the additional friction effect from the exposed portions of the reinforcing particles and because of the effects of the friction film created during the initial use of the friction member.

Consequently, an increase of the friction coefficient of the friction surface is enabled without need of using chemicals, which are necessary according to the prior art technology. Thereby, an improved method is provided regarding to the health and environmental issues and also considering the manufacturing process issues because no washing step is needed as in the method using electrolytic etching. Thus, the above mentioned object is achieved.

According to an embodiment the step of melting the surface layer of the first material comprises generating a beam directed towards a surface of the friction member to melt the surface layer of the first material.

The beam may for example be a beam of electrons or a beam of light. By using a beam the step of forming the friction surface, by melting the surface layer of the first material, may be performed relatively quickly and with an improved accuracy comparing to the prior art methods. Further, the process of forming the friction surface may be controlled in a simple manner by controlling the beam directed towards the surface of the friction member to melt the surface layer and by this to achieve the friction surface with predetermined characteristics. The beam can be controlled, for example, regarding the energy content in the beam and, the direction of the beam directed towards the surface of the friction member Thereby, the process of forming the friction surface, by using a beam for melting the surface layer of the first material can be automated. Thus, the efficiency of the process of forming the friction surface by using the beam can be improved.

According to an embodiment the beam is a laser beam. The laser beam may be generated, for example, by a semi-conductor laser diode or may be another suitable kind of laser beam. Use of a laser beam is an efficient method of melting materials. Thus, by using the laser beam the surface layer of the first material may be melted in an efficient and controlled manner.

According to an embodiment the beam is an electron beam. The electron beam is an alternative to the laser beam. By means of the electron beam the surface layer of the first material may be melted in an efficient and controlled manner.

According to an embodiment the method comprises the step of generating a relative movement between the friction member and the beam during the step of melting of the surface layer.

With the relative movement between the friction member and the beam it is meant that at least one of the friction member and the beam moves in relation to each other during the step of forming the friction surface. Thus, according to an embodiment the beam may move in a reciprocating movement along the surface of the friction member during the step of forming the friction surface of the friction member by melting the surface layer. When the beam moves along the surface of the friction member, for example in said reciprocating movement, the friction member may move in relation to the beam. Thereby, the friction surface may be formed in an efficient and controlled manner according to a continuous process of forming of the friction surface. Thereby, the process of forming the friction surface may be facilitated because the process may be automatized. Consequently, a yet improved method of forming a friction surface of a friction member is provided.

According to an embodiment the method comprises the step of generating a relative movement between the friction member and a melting device arranged to melt the surface layer of the first material.

Thus, the friction surface may be formed during and by a relative movement between the friction member and a melting device.

With the relative movement between the friction member and the melting device it is meant that at least one of the friction member and the melting device moves in relation to each other during the step of forming the friction surface. Thus, the friction member may be fixed and the melting device may move in relation to the friction member or the melting device may be fixed and the friction member may move in relation to the melting device. Further, as an additional alternative, both the friction member and the melting device may move such that a relative movement between the friction member and the melting device is achieved. The friction member may move in a first direction and the melting device may move of in a second direction, wherein the first direction may be opposite to the second direction. The relative movement between the friction member and the melting device may improve and simplify the process of forming of the friction surface of the friction member because the friction surface may be formed, for example as a continuous process. Thus, the friction surface does not necessarily need to be formed in a single step which may facilitate the process of forming the friction surface of the friction member.

According to an embodiment the relative movement comprises rotation of the friction member. Rotation is a form of movement that is relatively simple to generate. Thereby, by rotating of the friction member the friction surface may be formed in an efficient manner without need of a complicated equipment. According to an embodiment the friction member may rotate and the beam may move in the reciprocating movement along the surface of the friction member to form said friction surface of the friction member.

According to an embodiment the step of melting of the surface layer of the first material may comprise creating a surface structure pattern on the friction surface. The structure surface pattern may be defined as a formation on the friction surface, wherein the formation may have different shapes. Thus, different surface structure patterns may be formed by melting the surface layer of the first material.

When a new friction member, e.g. a brake disc is to be used a compatible component, i.e. a brake pad, is to be coupled with the friction member. The compatible component needs to be bedded-in with the friction member to enhance a good performance. The process of bedding-in includes a gradual buildup of heat in the friction component and in the compatible component during use of the friction member and the compatible component. As a result of this bedding-in process a layer of thin film that may also be called a third body or tribolayer is transferred from the compatible component to the friction surfaces of the friction member. This layer is important for wanted friction behavior of the friction member and also with regard to reduction of the risk of judders during use of the friction member.

Thus, the protruding particles and the surface structure pattern created on the friction surface establish adhering forces for the layer of thin film. Thereby, the layer of thin film can remain stable on the friction surface of the friction member during use of the friction member, for example during extreme braking conditions.

Thus, the surface structure pattern on the friction surface of the friction member contributes to a further improvement regarding friction characteristics of the friction surface. By choosing the surface structure pattern, i.e. by choosing the form of the surface structure pattern the friction characteristics of the friction surface may be affected, regarding, for example the direction of movement of the friction member during use of the friction member. The form of the surface structure pattern may be adapted to known form and/or direction of the movement of the friction member during use of the friction member. Thereby, a yet improved method of forming a friction surface of a friction member with an increased friction coefficient on the friction surface is provided.

According to an embodiment the first material comprises aluminium and possibly alloying elements. Aluminium or aluminium alloy is characterized by lower weight and high specific stiffness, high plastic flow strength, creep resistance, good oxidation and corrosion resistance, high thermal conductivity, excellent friction and wear performance comparing to traditional materials such as for example gray cast iron. Thus, an improved friction member is achieved with improved characteristics regarding to, inter alia, environmental issues.

The alloying elements may be present in the aluminium in a minor amount, i.e. in a small, or significantly small, amount than aluminium.

According to an embodiment the second material comprises a ceramic material. Ceramic materials have benefit characteristics regarding to, inter alia hardness, weight and corrosion resistance. Thus, a friction member comprising reinforcing particles made of a ceramic material has an improved durability.

According to an embodiment the ceramic material comprises at least one of SiC, Al₂O₃, WC and other carbides.

According to an embodiment the reinforcing particles form at least 10 % of the volume of the matrix composite, preferably the reinforcing particles form at least 20 % of the volume of the matrix composite and more preferably the reinforcing particles form at least 30 % of the volume of the matrix composite.

The volume percentage of the reinforcing particles has an effect on the maximum operating temperature at which temperature the friction member may operate. Thus, by deciding the volume percentage of the reinforcing particles, the friction member may be adapted to different purposes with respect to the maximum operating temperature of the friction member.

Further, the reinforcing particles may form at the most 70 % of the volume of the matrix composite or the reinforcing particles may form at the most 60 % of the volume of the matrix composite. Yet further, the reinforcing particles may form at the most 50 % of the volume of the matrix composite.

According to an embodiment the reinforcing particles are uniformly distributed in the first material. Thus, the reinforcing particles are distributed within the first material in a regular manner, which means that distances between the reinforcing particles, embedded in the first material, are substantially equal. Thanks to the uniformly distributed reinforcing particles in the first material, the strength characteristics of the matrix composite may be improved. This, because of the ability of more even distribution of forces within the matrix composite comparing to a matrix composite with less even distribution of the reinforcing particles. Consequently, an improved matrix composite is provided.

As a result, an improved friction member made of the matrix composite may be achieved.

According to an embodiment the friction member is formed to a brake disc, brake drum or to a clutch plate.

Further, an object of the present invention is to provide a friction member with an improved friction surface.

The object is achieved by the friction member defined in claim 16.

Thus , the object is achieved by a friction member comprising a matrix composite of a first material and reinforcing particles of a second material embedded in the first material , wherein the first material has a lower melting temperature than the second material. The fiction member has a friction surface formed by melting a surface layer of the first material of the friction member to expose a part of the reinforcing particles and thereby to enable an increase of the friction coefficient of the friction surface of the friction member.

According to an embodiment the surface layer is melted by means of a beam directed towards a surface of the friction member.

According to an embodiment the friction surface comprises a surface structure pattern on the friction surface.

According to an embodiment the beam is a laser beam.

According to an embodiment the beam is an electron beam.

According to an embodiment the first material comprises aluminium and possibly alloying elements.

According to an embodiment the second material comprises a ceramic material.

According to an embodiment the ceramic material comprises at least one of SiC, Al₂O₃, WC and other carbides.

According to an embodiment the reinforcing particles form at least 10 % of the volume of the matrix composite, preferably the reinforcing particles form at least 20 % of the volume of the matrix composite and more preferably the reinforcing particles form at least 30 % of the volume of the matrix composite.

According to an embodiment the reinforcing particles form at the most 70 % of the volume of the matrix composite, preferably the reinforcing particles form at the most 60 % of the volume of the matrix composite and more preferably the reinforcing particles form at the most 50 % of the volume of the matrix composite.

According to an embodiment the reinforcing particles are uniformly distributed in the first material.

According to an embodiment the friction member is formed to a brake disc, a brake drum or to a clutch plate.

### BRIEF DESCRIPTION OF THE DRAWINGS

In the following preferred embodiments of the invention are described with reference to the attached drawings, on which:
Fig. 1a is a cut view of a part of a friction member before a treatment in accordance with the method according to present invention,
Fig. 1b is a cut view of the part of a friction member illustrated in Fig. 1a after a treatment in accordance with the method according the present invention,
Fig. 2 is a perspective view, showing, in a schematic way, an apparatus adapted to perform a method in accordance with the present invention and
Fig. 3 is a side view illustrating the friction surface in Fig. 1b with a surface structure pattern on the friction surface according to an embodiment.

### DETAILED DESCRIPTION OF PREFERRED EMBODIMENTS OF THE INVENTION

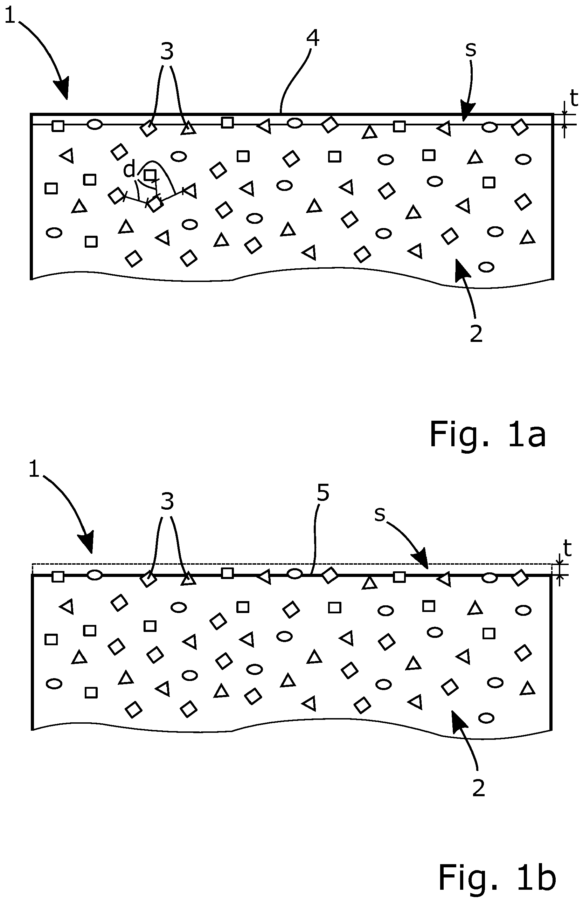

Fig. 1a is a cut view of a part of a friction member 1 comprising a matrix composite comprising a first material 2 and reinforcing particles 3 of a second material embedded in the first material 2. The first material 2 may comprise aluminium and possibly alloying elements. The second material may comprise a ceramic material such as at least one of silicon carbide (SiC), aluminium oxide (Al₂O₃), tungsten carbide (WC) and other carbides.

The first material has a lower melting temperature than the second material. The melting temperature of aluminium is approximately 670°C, the melting temperature of the SiC particles is approximately 2730°C, the melting temperature of Al₂O₃ is approximately 2072°C and the melting temperature of WC is approximately 2870°C. As a result of this melting temperature difference, a layer of the first material can be selectively removed by applying energy at a certain level, while the reinforcing particles of the second material can remain unchanged and in a solid form during and after the removal of the layer of the first material.

As illustrated in Fig. 1a, the particles 3 are embedded in the first material 2. Thus, the reinforcing particles 3 are distributed within the first material 2. The reinforcing particles 3 may be mixed with the first material 2 during a mixing process in connection with the forming of the matrix composite and the friction member 1.

Thus, thanks to the reinforcing particles 3 embedded in the first material 2 the strength of the matrix composite is increased comparing to a pure first material 2.

The reinforcing particles 3 may form at least 10 % of the volume of the matrix composite. Preferably the reinforcing particles 3 form at least 20 % of the volume of the matrix composite, and more preferably the reinforcing particles 3 form at least 30 % of the volume of the matrix composite.

Further, the reinforcing particles 3 may form at the most 70 % of the volume of the matrix composite. Preferably the reinforcing particles 3 form at the most 60 % of the volume of the matrix composite, and more preferably the reinforcing particles 3 form at the most 50 % of the volume of the matrix composite.

The volume percentage of the reinforcing particles 3 in the matrix composite has, inter alia, an effect on the maximum operating temperature of a friction member 1 made of the matrix composite. Thus, by deciding the volume percentage of the reinforcing particles 3, the friction member 1 may be adapted to different purposes with respect to the maximum operating temperature of the friction member 1.

Further, the reinforcing particles 3 may be uniformly distributed in the first material 2. Thus, the reinforcing particles 3 embedded in the first material 2 may be distributed within the first material in a regular manner, which means that distances d, schematically illustrated in Fig. 1a, between the reinforcing particles 3 may be substantially equal.

The size of the particles 3 may be approximately between 1 to 500 µm, for instance 5-50 µm and the distance d may for example be between 1 to 500 µm, for instance10-30 µm.

For simplicity reasons only the distances d between four particles 3 have been illustrated and only in the plane of the sheet of the Fig. 1a. However, the distance d may be valid in three dimensions of the matrix material of the friction member 1. Thereby, a uniform matrix composite is provided, by which the characteristics of a friction member 1 made of the matrix composite may be improved with respect to, inter alia, strength of the friction member 1. Thus, an improved matrix composite may be provided and by this also an improved friction member 1 made of the matrix composite may be achieved thanks to the reinforcing particles 3 uniformly distributed within the first material 2.

Fig. 1b is a cut view of the part of a friction member 1 illustrated in Fig. 1a after a treatment in accordance with the method according to the present invention. In Fig. 1b, the part of the friction member 1 is illustrated after melting of a surface layer s with thickness t by being exposed to a heat energy, wherein parts of the reinforcing particles 3 are exposed. The reinforcing particles 3 have been exposed because the melted first material 2 has be relocated within the melted surface layer s of the friction member 1. The melted first material 2 can be relocated within the surface layer s of the friction member 1due to the change of the state of the surface layer s from solid to liquid state and due to forces acting on the surface layer s of the friction member 1 during the melting process. The forces are associated with heating of the surface layer s of the friction member 1 and may, for example, be a pressure forces.

The thickness t of the surface layer s may be controlled by varying the temperature and the energy amount applied to a surface 4 of the friction member 1. By controlling the amount of energy applied to the surface 4, or into the surface layer s, the thickness t of the surface layer s to be melted in order to expose the part of the reinforcing particles 3 may be controlled. The thickness t of the surface layer s, to be melted, may be controlled depending on the size of reinforcing particles 3, such that the thickness t of the surface layer t is less than the size of the reinforcing particles 3. Thereby, after the melting of the first material of the surface layer s at least a portion of each of the part of the reinforcing particles 3 protrude from the friction surface 5. The melting of the first material may comprise a removal of a portion of the surface layer, e.g. by evaporation of the first material.

As can be seen, the surface layer s of the first material 2 has been removed and by this some of the reinforcing particles 3 have been exposed. The exposed reinforcing particles 3 protrude from the friction surface 5 formed by removing of the surface layer s of the first material 2. The part of the reinforcing particles 3 protruding from the friction surface 5 of the friction member 1 contribute to an increase of the friction coefficient of the friction surface 5 of the friction member 1 during use of the friction member 1 because of friction forces generated by the protruding portions of the reinforcing particles 3.

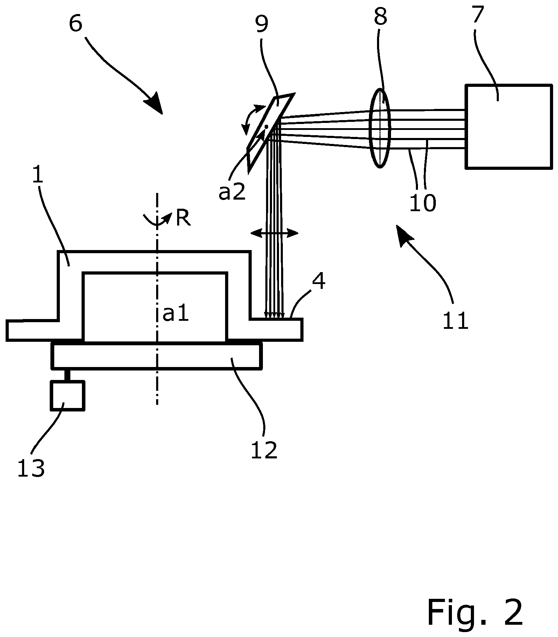

Fig. 2 illustrates, in a schematic way, an apparatus 6 adapted to perform a method in accordance with the present invention. The apparatus 6 comprises a beam source 7, for example a laser beam source. The laser beam may for example be generated by a semi-conductor laser diode or may be another suitable kind of laser beam.

Further, the apparatus 6 comprises a lens 8 and a mirror 9 arranged to direct beam 10 into the surface 4 of the friction member 1 in order to form a friction surface 5 of the friction member 1. The beam source 7, the lens 8 and the mirror 9 are comprised by a melting device 11. The beam 10 may be laser beam, or the beam 10 may be electron beam. The laser beam may be a pulsed laser beam.

The apparatus 6 may comprise a holding device 12 arranged for holding of the friction member 1 before and during the forming of the friction surface 5 of the friction member 1. The holding device 12 may, for example be formed as a disc of a metallic material or of any other suitable materials.

As illustrated in Fig. 2, the friction member 1 may be formed to a brake disc. The brake disc may be suitable for a vehicle, such as a car or the brake disc may be formed to be used in, for example, a wind power plant. The friction member may also be formed to a clutch plate. The clutch plate may be used for transferring of kinetic energy from an engine, for example from a combustion engine or from an electric engine. The engine may be arranged in a vehicle.

According to an embodiment, the apparatus 6 may be arranged to enable rotation of the friction member 1 around a first axis a1 in a direction of rotation R. The direction of rotation R around the first axis a1 may be clockwise or counterclockwise direction of rotation. The rotation of the friction member 1 may be achieved by rotating the holding device 12, wherein rotational movement of the holding device 12 may be transferred to the friction member 1 held by the holding device 12.

The apparatus 6 may be arranged to enable simultaneous movement, in the same or opposite direction, of the melting device 11 and the friction member 1. The melting device 11 and the friction member 1 may rotate around the first axis a1. The first axis a1 may be a common and the same axis of rotation for both the friction member 1 and the melting device 11.

Further, according to an embodiment the friction member 1 may be fixed and the melting device 11 may move, for example rotate, in relation to the fixed friction member 1.

The rotation of the friction member 1 may, be achieved, for example, by an electric motor 13 arranged to rotate the holding device 12 and thereby also to rotate the friction member 1 around the first axis a1. In a similar way, the rotation of the melting device 11 may be achieved by an additional electric motor or by the electric motor 13 that may be arranged to rotate the holding device 12 and the friction member 1. Thus, both the friction member 1 and the melting device 11 may be rotated by the same electric motor.

According to an embodiment the relative movement between the friction member 1 and the beam 10 during the step of melting of the surface layer of the friction member 1 may also comprise a reciprocating movement of the mirror 9. The mirror 9 has a function of directing the beam 10, arriving from the beam source 7, towards the surface 4 of the friction member 1. The beam 10 is directed towards the surface 4 of the friction member 1, such that the beam 10 creates a substantially right angle with the surface 4 of the friction member 1, which means that the beam 10 is substantially perpendicular to the surface 4 of the friction member 1. Thus, the relative movement between the friction member 1 and the beam 10 may be achieved by moving the mirror 9.

The mirror 9, may be controlled such that the reciprocating movement of the mirror is achieved. The mirror 9 may by controlled to rotate around a second axis a2 in a reciprocating manner, i.e. back and forth around the second axis a2 in clockwise and counterclockwise directions as illustrated in Fig. 2. As an alternative the mirror 9 may be controlled to achieve a linear movement of the mirror 9 in order to direct the beam 10 towards the surface 4 of the friction member 1. Thus, the movement of the beam 10 along the surface 4 of the friction member 1 may be achieved by the movement of the mirror 9. The movement of the mirror 9 can cause the beam 10 to move in a back and forth, reciprocating manner, and hit the surface 4 of the friction member 1 back and forth along the surface 4 of the friction member 1.

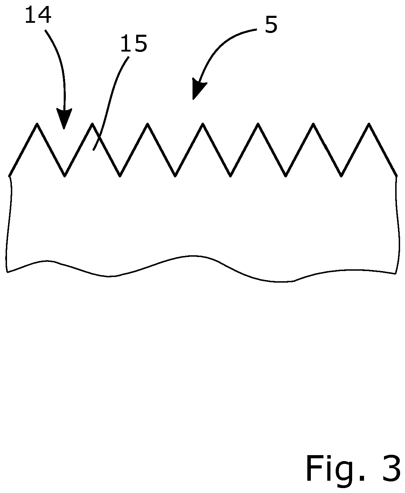

Further, the step of melting of the surface layer of the first material may comprise creating a surface structure pattern on the friction surface 5. The surface structure pattern can be achieved by controlling the mirror 9 in order to cause the beam 10 to hit the surface 4 according to a predefined pattern intended to be formed on the friction surface 5 of the friction member 1. Further, also the movement of the friction member 1 may contribute to forming of the surface structure pattern on the friction surface 5. Different surface structure patterns on the friction surface 5 may be created, as for example lines circles, crosses or other forms. The surface structure patterns are described in conjunction to Fig. 3 below.

Fig. 3 is a cut side view illustrating the friction surface 5 in Fig. 1b with a surface structure pattern on the friction surface 5 according to an embodiment. As can be seen in Fig. 3, the surface structure pattern may be formed by depressions 14 and protrusions 15 formed by the beam 10 described in conjunction to Fig. 2. The depressions 14 and the protrusions 15 may be arranged as elongated and parallel lines forming a surface structure pattern of parallel and elongated lines. According to some embodiments, the surface structure pattern may have a form of, for example, circles, crosses or other forms. The surface structure pattern on the friction surface 5 may be a combination of circles, crosses or other forms.

The invention is not restricted to the described embodiment but may be varied freely within the scope of the claims.

## Claims

1. A method of forming a friction surface (5) of a friction member (1), the method comprising the steps of:
- forming the friction member (1) of a matrix composite by forming the matrix composite to a desired form of the friction member (1), wherein the matrix composite comprises a first material (2) and reinforcing particles (3) of a second material embedded in the first material (2), wherein said first material (2) has a lower melting temperature than said second material, wherein said reinforcing particles (3) form at least 10 % of the volume of the matrix composite and thereby of the volume of the friction member (1), and
- forming said friction surface (5) by melting a surface layer (s) of the first material (2) of the friction member (1) to expose a part of the reinforcing particles (3) and thereby to enable an increase of the friction coefficient of the friction surface (5) of the friction member (1),
wherein said step of melting the surface layer (s) of the first material (2) comprises generating a beam (10) directed towards a surface (4) of the friction member (1) to melt said surface layer (s) of the first material (2), wherein said beam (10) is a laser beam or an electron beam.

2. The method according to claim 1, comprising generating a relative movement between the friction member (1) and a melting device (11) arranged to melt said surface layer (s) of the first material (2).

3. The method according to claim 2, wherein said relative movement comprises rotation of the friction member (1).

4. The method according to any of claims 1 to 3, wherein said step of melting of the surface layer (s) of the first material (2) comprises creating a surface structure pattern on said friction surface (5).

5. The method according to any of claims 1 to 4, wherein said first material (2) comprises aluminium and possibly alloying elements.

6. The method according to any of claims 1 to 5, wherein said second material (2) comprises a ceramic material.

7. The method according to claim 6, wherein said ceramic material comprises at least one of SiC, Al₂O₃, WC and other carbides.

8. The method according to any of claims 1 to 7, wherein said reinforcing particles (3) form at least 20 % of the volume of the matrix composite and preferably said reinforcing particles (3) form at least 30 % of the volume of the matrix composite.

9. The method according to any of claims 1 to 8, wherein said reinforcing particles (3) form at the most 70 % of the volume of the matrix composite, preferably said reinforcing particles (3) form at the most 60 % of the volume of the matrix composite and more preferably said reinforcing particles (3) form at the most 50 % of the volume of the matrix composite.

10. The method according to any of claims 1 to 9, wherein said reinforcing particles (3) are uniformly distributed in the first material.

11. The method according to any of claims 1 to 10, wherein said friction member (1) is formed to a brake disc, a brake drum or to a clutch plate.

12. A friction member (1) made of a matrix composite comprising a first material (2) and reinforcing particles (3) of a second material embedded in the first material (2), wherein said first material (2) has a lower melting temperature than said second material, **characterized in that** the friction member (1) is formed of a matrix composite by forming the matrix composite to a desired form of the friction member (1), wherein the matrix composite comprises a first material (2) and reinforcing particles (3) of a second material embedded in the first material (2), wherein said first material (2) has a lower melting temperature than said second material, wherein said reinforcing particles (3) form at least 10 % of the volume of the matrix composite and thereby of the volume of the friction member (1), wherein the fiction member (1) has a friction surface (5) formed by applying a method according to any of claims 1 to 11, wherein the friction surface (5) is formed by melting a surface layer (s) of the first material (2) of the friction member (1) to expose a part of the reinforcing particles (3) and thereby to enable an increase of the friction coefficient of the friction surface (5) of the friction member (1), wherein said surface layer (s) is melted by means of a laser beam or an electron beam (10) directed towards a surface (4) of the friction member (1).

13. The friction member (1) according to claim 12, wherein said friction surface (5) comprises a surface structure pattern on said friction surface (5).

## Patentansprüche

1. Verfahren zur Herstellung einer Reibungsfläche (5) eines Reibungselements (1), wobei das Verfahren folgende Schritte umfasst:
- Herstellen des Reibungselements (1) aus einem Matrixverbundwerkstoff durch Formen des Matrixverbundwerkstoffs in eine gewünschte Form des Reibungselements (1), wobei der Matrixverbundwerkstoff ein erstes Material (2) und Verstärkungspartikel (3) aus einem zweiten Material, die in das erste Material (2) eingebettet sind, umfasst, wobei das erste Material (2) eine niedrigere Schmelztemperatur als das zweite Material aufweist, wobei die Verstärkungspartikel (3) mindestens 10 % des Volumens des Matrixverbundwerkstoffs und damit des Volumens des Reibungselements (1) ausbilden, und
- Herstellen der Reibungsfläche (5) durch Schmelzen von (einer) Oberflächenschicht(en) des ersten Materials (2) des Reibungselements (1), um einen Teil der Verstärkungspartikel (3) freizulegen und dadurch eine Erhöhung des Reibungskoeffizienten der Reibungsfläche (5) des Reibungselements (1) zu ermöglichen,
wobei der Schritt des Schmelzens der Oberflächenschicht(en) des ersten Materials (2) das Erzeugen eines Strahls (10), der auf eine Oberfläche (4) des Reibungselements (1) gerichtet ist, umfasst, um die Oberflächenschicht(en) des ersten Materials (2) zu schmelzen, wobei der Strahl (10) ein Laserstrahl oder ein Elektronenstrahl ist.

2. Verfahren nach Anspruch 1, umfassend das Erzeugen einer relativen Bewegung zwischen dem Reibungselement (1) und einer Schmelzvorrichtung (11), die dazu angeordnet ist, die Oberflächenschicht(en) des ersten Materials (2) zu schmelzen.

3. Verfahren nach Anspruch 2, wobei die relative Bewegung ein Drehen des Reibungselements (1) umfasst.

4. Verfahren nach einem der Ansprüche 1 bis 3, wobei der Schritt des Schmelzens der Oberflächenschicht(en) des ersten Materials (2) das Erzeugen eines Oberflächenstrukturmusters auf der Reibungsfläche (5) umfasst.

5. Verfahren nach einem der Ansprüche 1 bis 4, wobei das erste Material (2) Aluminium und möglicherweise Legierungselemente umfasst.

6. Verfahren nach einem der Ansprüche 1 bis 5, wobei das zweite Material (2) ein Keramikmaterial umfasst.

7. Verfahren nach Anspruch 6, wobei das Keramikmaterial mindestens eines aus SiC, Al₂O₃, WC und anderen Karbiden umfasst.

8. Verfahren nach einem der Ansprüche 1 bis 7, wobei die Verstärkungspartikel (3) mindestens 20 % des Volumens des Matrixverbundwerkstoffs ausbilden und die Verstärkungspartikel (3) vorzugsweise mindestens 30 % des Volumens des Matrixverbundwerkstoffs ausbilden.

9. Verfahren nach einem der Ansprüche 1 bis 8, wobei die Verstärkungspartikel (3) höchstens 70 % des Volumens des Matrixverbundwerkstoffs ausbilden, die Verstärkungspartikel (3) vorzugsweise höchstens 60 % des Volumens des Matrixverbundwerkstoffs ausbilden und die Verstärkungspartikel (3) besonders bevorzugt höchstens 50 % des Volumens des Matrixverbundwerkstoffs ausbilden.

10. Verfahren nach einem der Ansprüche 1 bis 9, wobei die Verstärkungspartikel (3) gleichmäßig in dem ersten Material verteilt sind.

11. Verfahren nach einem der Ansprüche 1 bis 10, wobei das Reibungselement (1) zu einer Bremsscheibe, einer Bremstrommel oder zu einer Kupplungsscheibe geformt wird.

12. Reibungselement (1), das aus einem Matrixverbundwerkstoff, umfassend ein erstes Material (2) und Verstärkungspartikel (3) aus einem zweiten Material, die in das erste Material (2) eingebettet sind, hergestellt ist, wobei das erste Material (2) eine niedrigere Schmelztemperatur als das zweite Material aufweist, **dadurch gekennzeichnet, dass** das Reibungselement (1) aus einem Matrixverbundwerkstoff durch Formen des Matrixverbundwerkstoffs in eine gewünschte Form des Reibungselements (1) hergestellt ist, wobei der Matrixverbundwerkstoff ein erstes Material (2) und Verstärkungspartikel (3) aus einem zweiten Material, die in das erste Material (2) eingebettet sind, umfasst, wobei das erste Material (2) eine niedrigere Schmelztemperatur als das zweite Material aufweist, wobei die Verstärkungspartikel (3) mindestens 10 % des Volumens des Matrixverbundwerkstoffs und damit des Volumens des Reibungselements (1) ausbilden, wobei das Reibungselement (1) eine Reibungsfläche (5), die durch Anwenden eines Verfahrens nach einem der Ansprüche 1 bis 11 hergestellt ist, aufweist, wobei die Reibungsfläche (5) durch Schmelzen von (einer) Oberflächenschicht(en) des ersten Materials (2) des Reibungselements (1), um einen Teil der Verstärkungspartikel (3) freizulegen und dadurch eine Erhöhung des Reibungskoeffizienten der Reibungsfläche (5) des Reibungselements (1) zu ermöglichen, hergestellt ist, wobei die Oberflächenschicht(en) mittels eines Laserstrahls oder eines Elektronenstrahls (10), der auf eine Oberfläche (4) des Reibungselements (1) gerichtet ist, geschmolzen wird.

13. Reibungselement (1) nach Anspruch 12, wobei die Reibungsfläche (5) ein Oberflächenstrukturmuster auf der Reibungsfläche (5) umfasst.

## Revendications

1. Procédé de formation d'une surface de frottement (5) d'un élément de frottement (1), le procédé comprenant les étapes suivantes :
- la formation de l'élément de frottement (1) d'un composite à matrice en formant le composite à matrice selon une forme souhaitée de l'élément de frottement (1), dans lequel le composite à matrice comprend un premier matériau (2) et des particules de renforcement (3) d'un deuxième matériau intégré dans le premier matériau (2), dans lequel ledit premier matériau (2) a une température de fusion inférieure à celle dudit deuxième matériau, dans lequel lesdites particules de renforcement (3) forment au moins 10 % du volume du composite à matrice et, par conséquent, du volume de l'élément de frottement (1), et
- la formation de ladite surface de frottement (5) par fusion d'une couche de surface (s) du premier matériau (2) de l'élément de frottement (1) pour exposer une partie des particules de renforcement (3) et permettre ainsi une augmentation du coefficient de frottement de la surface de frottement (5) de l'élément de frottement (1), dans lequel ladite étape de fusion de la couche de surface (s) du premier matériau (2) comprend la génération d'un faisceau (10) dirigé vers une surface (4) de l'élément de frottement (1) pour faire fondre ladite couche de surface (s) du premier matériau (2), dans lequel ledit faisceau (10) est un faisceau laser ou un faisceau d'électrons.

2. Procédé selon la revendication 1, comprenant la génération d'un mouvement relatif entre l'élément de frottement (1) et un dispositif de fusion (11) agencé pour faire fondre ladite couche de surface (s) du premier matériau (2).

3. Procédé selon la revendication 2, dans lequel ledit mouvement relatif comprend la rotation de l'élément de frottement (1).

4. Procédé selon l'une quelconque des revendications 1 à 3, dans lequel ladite étape de fusion de la couche de surface (s) du premier matériau (2) comprend la création d'un motif de structure de surface sur ladite surface de frottement (5).

5. Procédé selon l'une quelconque des revendications 1 à 4, dans lequel ledit premier matériau (2) comprend de l'aluminium et éventuellement des éléments d'alliage.

6. Procédé selon l'une quelconque des revendications 1 à 5, dans lequel ledit deuxième matériau (2) comprend un matériau céramique.

7. Procédé selon la revendication 6, dans lequel ledit matériau céramique comprend au moins l'un parmi SiC, Al₂O₃, WC et d'autres carbures.

8. Procédé selon l'une quelconque des revendications 1 à 7, dans lequel lesdites particules de renforcement (3) forment au moins 20 % du volume du composite à matrice et de préférence lesdites particules de renforcement (3) forment au moins 30 % du volume du composite à matrice.

9. Procédé selon l'une quelconque des revendications 1 à 8, dans lequel lesdites particules de renforcement (3) forment au plus 70 % du volume du composite à matrice, de préférence lesdites particules de renforcement (3) forment au plus 60 % du volume du composite à matrice et de manière davantage préférée lesdites particules de renforcement (3) forment au plus 50 % du volume du composite à matrice.

10. Procédé selon l'une quelconque des revendications 1 à 9, dans lequel lesdites particules de renforcement (3) sont réparties uniformément dans le premier matériau.

11. Procédé selon l'une quelconque des revendications 1 à 10, dans lequel ledit élément de frottement (1) est formé sur un disque de frein, un tambour de frein ou sur un disque d'embrayage.

12. Elément de frottement (1) composé d'un composite à matrice comprenant un premier matériau (2) et des particules de renforcement (3) d'un deuxième matériau intégré dans le premier matériau (2), dans lequel ledit premier matériau (2) a une température de fusion inférieure à celle dudit deuxième matériau, **caractérisé en ce que** l'élément de frottement (1) est formé d'un composite à matrice en formant le composite à matrice selon une forme souhaitée de l'élément de frottement (1), dans lequel le composite à matrice comprend un premier matériau (2) et des particules de renforcement (3) d'un deuxième matériau intégré dans le premier matériau (2), dans lequel ledit premier matériau (2) a une température de fusion inférieure à celle dudit deuxième matériau, dans lequel lesdites particules de renforcement (3) forment au moins 10 % du volume du composite à matrice et, par conséquent, du volume de l'élément de frottement (1), dans lequel l'élément de frottement (1) a une surface de frottement (5) formée par application d'un procédé selon l'une quelconque des revendications 1 à 11, dans lequel la surface de frottement (5) est formée par fusion d'une couche de surface (s) du premier matériau (2) de l'élément de frottement (1) afin d'exposer une partie des particules de renforcement (3) et permettre ainsi une augmentation du coefficient de frottement de la surface de frottement (5) de l'élément de frottement (1), dans lequel ladite couche de surface (s) est fondue au moyen d'un faisceau laser ou d'un faisceau d'électrons (10) dirigé vers une surface (4) de l'élément de frottement (1).

13. Élément de frottement (1) selon la revendication 12, dans lequel ladite surface de frottement (5) comprend un motif de structure de surface sur ladite surface de frottement (5).
